# EUROPÄISCHE PATENTSCHRIFT

(11) **EP 1 736 019 B1**
(45) Veröffentlichungstag und Bekanntmachung des Hinweises auf die Patenterteilung: **26.12.2007**
(21) Anmeldenummer: 05743033.2
(22) Anmeldetag: 11.04.2005
(51) Int. Cl.: H04Q 7/32, H04L 12/56

(54) **VERFAHREN ZUM BETREIBEN VON FUNKKOMMUNIKATIONSSYSTEMEN**
METHOD FOR OPERATING RADIO COMMUNICATIONS SYSTEMS
PROCEDE POUR FAIRE FONCTIONNER DES SYSTEMES DE RADIOCOMMUNICATION

(30) Priorität: 16.04.2004 DE 102004018574
(43) Veröffentlichungstag der Anmeldung: 27.12.2006
(73) Patentinhaber: NOKIA SIEMENS NETWORKS GMBH & CO. KG, 81541 München (DE)
(72) Erfinder: KULKARNI, Vivek, 82008 Unterhaching (DE); LUO, Jijun, 80797 München (DE); SANKHLA, Vishal, Sunnyvale, 94087 CA (US)
(86) Internationale Anmeldenummer: PCT/EP2005/051583
(87) Internationale Veröffentlichungsnummer: WO 2005/101860

(56) Entgegenhaltungen:
- WO-A-03/017706
- US-A- 5 940 504
- US-A- 6 052 600
- US-A1- 2003 032 417
- US-B1- 6 567 855

## Beschreibung

Die Erfindung betrifft Verfahren zum Betreiben von Funkkommunikationssystemen, bei denen Zulassungsinformationen an Funkstationen gesendet werden, so dass diese Funkstationen durch die Zulassungsinformationen freigeschaltet werden zur Kommunikation unter Verwendung einer Funkzugangstechnologie. Weiterhin betrifft die Erfindung Einrichtungen zur Durchführung des Verfahrens.

In Funkkommunikationssystemen werden Nachrichten, beispielsweise mit Sprachinformationen, Bildinformation, Videoinformation, SMS (Short Message Service), MMS (Multimedia Messaging Service) oder Signalisierungsinformationen, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige Teilnehmerfunkstationen oder netzseitige Funkeinrichtungen wie Repeater, Basisstationen oder Funkzugangspunkte handeln. In einem Mobilfunkkommunikationssystem handelt es sich bei zumindest einem Teil der Teilnehmerfunkstationen um mobile Funkstationen.

Heutige Teilnehmerfunkstationen sind in der Regel hardwarebasiert, so dass die Funkzugangstechnologien, welche eine Teilnehmerfunkstation zur Kommunikation verwenden kann, von ihrer Anzahl her stark beschränkt und nicht veränderbar sind. Dies führt beispielsweise dazu, dass bei Einführung eines neuen Funkstandards oder gegebenenfalls auch eines neuartigen Dienstes auch neue Teilnehmerfunkstationen zur Verfügung gestellt werden müssen. Bei SDR (Software Defined Radio) Teilnehmerfunkstationen hingegen laufen Softwaremodule auf generischen Hardwareplattformen ab, welche die zur Funkkommunikation erforderlichen Funktionen wie Erzeugen eines zu sendenden Signals und Detektieren eines empfangenen Signals steuern. Hierdurch kann eine SDR Teilnehmerfunkstation, je nachdem, welche Software ihr zur Verfügung steht, unter Verwendung verschiedenster Funkzugangstechnologien kommunizieren.

Aus der Druckschrift US-A-6 052 600, auf der der Oberbegriff der Patentansprüche 1 und 5 basiert, sind ein Verfahren und eine Einrichtung für ein Funkkommunikationssystem mit Mitteln zum Versenden von Zulassungsinformationen an Funkstationen bekannt, wobei die jeweiligen Funkstationen zur Kommunikation unter Verwendung einer Funkzugangstechnologie durch die Zulassungsinformationen freigeschaltet werden.

Ferner offenbart die Druckschrift US-A-5 940 504 ein Lizenzverwaltungssystem, bei dem ein Lizenznehmer seine Nutzungsdauer misst und den Messbericht an einen Lizenzgeber sendet.

Die zur Kommunikation unter Verwendung einer Funkzugangstechnologie benötigte Software kann den Teilnehmerfunkstationen durch den Betreiber des Funkkommunikationssystems zur Verfügung gestellt werden. Dieser muss, um die Software einsetzen zu dürfen, Zahlungen an den Hersteller der Software leisten. Eine Bezahlung kann im Rahmen von Softwarelizenzen erfolgen, so dass ein Betreiber z.B. Softwarelizenzen für eine bestimmte Anzahl an Teilnehmerfunkstationen kaufen kann. Der Betreiber kann dann Teilnehmerfunkstationen durch die Versendung von Zulassungsinformationen zur Kommunikation unter Verwendung der jeweiligen Funkzugangstechnologie befähigen. Die Zulassungsinformationen können z.B. aus der gebrauchsfertigen Software an sich bestehen oder auch aus einem Schlüssel oder Code, welcher den Einsatz der von der Teilnehmerfunkstation gespeicherten Software ermöglicht. Je nach konkreter Ausgestaltung können Zulassungsinformationen die Verwendung der jeweiligen Funkzugangstechnologie temporär oder permanent ermöglichen. Ist die Anzahl der im Funkkommunikationssystem zur Verfügung stehenden Softwarelizenzen limitiert, so besteht das Problem, dass in der Regel nicht alle Funkstationen des SDR Funkkommunikationssystems gleichzeitig unter Verwendung der lizenzierten Funkzugangstechnologie kommunizieren können. Der Betreiber muss somit eine Auswahl unter den Funkstationen treffen, welche zu einem Zeitpunkt die lizenzierte Funkzugangstechnologie verwenden dürfen.

Der Erfindung liegt somit die Aufgabe zugrunde, ein Verfahren zum Betreiben von Funkkommunikationssystemen zu schaffen, wobei nicht alle Funkstationen gleichzeitig zur Kommunikation unter Verwendung einer Funkzugangstechnologie freigeschaltet werden sollen und Nachrichten effizient weitergeleitet werden. Weiterhin soll eine geeignete Einrichtung zur Durchführung des Verfahrens aufgezeigt werden.

Erfindungsgemäß wird diese Aufgabe hinsichtlich des Verfahrens durch die Maßnahmen des Patentanspruchs 1 und hinsichtlich der Einrichtung durch die Merkmale des Patentanspruchs 5 gelöst.

Vorteilhafte Ausgestaltungen und Weiterbildungen sind Gegenstand von Unteransprüchen.

In dem erfindungsgemäßen Verfahren zum Betreiben eines Funkkommunikationssystems werden Zulassungsinformationen an Funkstationen gesendet, so dass diese Funkstationen durch die Zulassungsinformationen temporär freigeschaltet werden zur Kommunikation unter Verwendung einer Funkzugangstechnologie. Nachrichten sind zwischen einer ersten Funkstation und einer zweiten Funkstation über einen über eine oder mehrere weitere temporär freigeschaltete Funkstationen verlaufenden Pfad übertragbar. Es erfolgt eine Versendung der Zulassungsinformationen derart, dass während einer Nachrichtenübertragung über den Pfad unter Verwendung der Funkzugangstechnologie zu jedem Zeitpunkt eine Teilmenge an unter einander benachbarten Funkstationen des Pfades freigeschaltet ist zur Kommunikation unter Verwendung der Funkzugangstechnologie.

Die Zulassungsinformationen stellen nicht eine bloße Erlaubnis zur Kommunikation unter Verwendung der Funkzugangstechnologie dar, wie es zum Beispiel eine Zuweisung von Funkressourcen für eine Kommunikation unter Verwendung der Funkzugangstechnologie darstellt, vielmehr können die Funkstationen ohne die Zulassungsinformationen nicht derart eingesetzt werden, dass eine Kommunikation unter Verwendung der Funkzugangstechnologie möglich ist. Beispielsweise können die Zulassungsinformationen eine von einer SDR Funkstation gespeicherte Software zumindest zeitweise freischalten, die Zulassungsinformationen können in diesem Fall einen Schlüssel bzw. Code enthalten, welcher die Anwendung bzw. das Ablaufen der gespeicherten Software ermöglicht. Die Freischaltung der Funkstationen zur Kommunikation unter Verwendung der Funkzugangstechnologie ist temporär, was zum Beispiel dadurch realisiert werden kann, dass der Empfang der Zulassungsinformationen einer Funkstation die Verwendung der Funkzugangstechnologie nur für eine bestimmte Zeitspanne oder einen bestimmten Zeitraum ermöglicht, oder dadurch, dass die Zulassungsinformationen aus einem Nachrichtenpaar bestehen, so dass zwischen dem Empfang der ersten und der zweiten Nachricht des Paares die Kommunikation unter Verwendung der Funkzugangstechnologie möglich ist. Für die Versendung und Wirkung der Zulassungsinformationen können an sich bekannte Verfahren, wie sie zum Beispiel zur Freischaltung von Computersoftware verwendet werden, zum Einsatz kommen. Die Versendung der Zulassungsinformationen kann zum Beispiel per Funk unter Verwendung einer anderen als der von den Zulassungsinformationen betroffenen Funkzugangstechnologie erfolgen.

Durch eine Funkzugangstechnologie sind die senderseitig durchzuführenden Schritte der Informationsverarbeitung undversendung, sowie die empfängerseitig durchzuführenden Schritte des Empfangs von Signalen und deren Verarbeitung festgelegt. In der Regel unterscheiden sich die Funkzugangstechnologien verschiedener Funkkommunikationsstandards, wie zum Beispiel GSM (Global System for Mobile Communication), GPRS (General Packet Radio Service), EDGE (Enhanced Data Rate for GSM Evolution), TSM (Time Division Synchronous Code Division Multiple Access), DECT (Digital European Cordless Telephony), IS95 (Interim Standard No. 95), cdma2000, UMTS (Universal Mobile Telecommunications System), IEEE 802.11, Bluetooth, sowie von zukünftigen Systemen der vierten Generation, voneinander.

In dem betrachtetem Funkkommunikationssystem können Nachrichten von Funkstation zu Funkstation durch Weiterleitung der Nachrichten durch andere Funkstationen über einen Pfad übertragen werden. Diese Funkstationen können insbesondere Teilnehmerfunkstationen und/oder netzseitige Repeater sein. Bei den Funkstationen des Pfades handelt es sich hierbei um den Sender der Nachricht, um die weiterleitenden Funkstationen, und den Empfänger der Nachricht. Benachbarte Funkstationen können direkt miteinander kommunizieren, ohne dass es einer Weiterleitung von Nachrichten zwischen ihnen bedarf. Somit befinden sich benachbarte Funkstationen jeweils gegenseitig in ihrem Funkabdeckungsbereich. Gemäß der Erfindung ist bei einer Nachrichtenübertragung über einen Pfad eine Teilmenge an benachbarten Funkstationen zur Kommunikation unter Verwendung einer Funkzugangstechnologie freigeschaltet. Bei dieser Teilmenge handelt es sich um einen zusammenhängenden Teil der Funkstationen des Pfades, jedoch nicht um alle Funkstationen des Pfades. Die Zusammensetzung der Teilmenge ist nicht fix, sondern kann sich im Laufe der Nachrichtenübertragung über den Pfad verändern.

Ein Vorteil des erfindungsgemäßen Verfahrens ist, dass ein Betreiber eines Funkkommunikationssystems, welcher eine Nachrichtenübertragung zwischen Funkstationen über einen Pfad ermöglichen will, mit einer Anzahl an Lizenzen für die für die Nachrichtenübertragung über den Pfad verwendete Funkzugangstechnologie auskommt, welche niedriger ist als die Anzahl der Funkstationen des Pfades.

In Weiterbildung der Erfindung erfolgt eine Versendung der Zulassungsinformationen derart, dass während einer Nachrichtenübertragung über den Pfad unter Verwendung der Funkzugangstechnologie zu jedem Zeitpunkt zwei benachbarte Funkstationen des Pfades freigeschaltet sind zur Kommunikation unter Verwendung der Funkzugangstechnologie. Freigeschaltet zur Kommunikation unter Verwendung der Funkzugangstechnologie sind in diesem Fall genau zwei Funkstationen, und zwar diejenigen, zwischen welchen die Nachricht aktuell versendet bzw. weitergeleitet wird. Diese Freischaltung kann dann im Laufe der Nachrichtenübertragung an andere Funkstationen übergeben bzw. weitergeleitet werden.

Vorteilhaft ist es, wenn die Versendung der Zulassungsinformationen zur Nachrichtenübertragung über den Pfad durch eine netzseitige Einrichtung erfolgt. Bei einer solchen netzseitigen Einrichtung kann es sich zum Beispiel um eine Basisstation eines zellularen Funkkommunikationssystem, welches einen Adhoc-Modus aufweist, oder auch um einen Funkzugangspunkt eines WLAN (Wireless Local Area Network) handeln.

In Weiterbildung der Erfindung erfolgt die Versendung der Zulassungsinformationen zur Nachrichtenübertragung über den Pfad zumindest teilweise durch Funkstationen des Pfades. In diesem Fall kann eine aktuell zur Kommunikation unter Verwendung der Funkzugangstechnologie freigeschaltete Funkstation ihre Freischaltung an eine andere Funkstation weitergeben.

Die erfindungsgemäße Einrichtung für ein Funkkommunikationssystem weist Mittel zum Versenden von Zulassungsinformationen an Funkstationen eines Pfades auf, so dass diese Funkstationen zur Kommunikation unter Verwendung einer Funkzugangstechnologie durch die Zulassungsinformationen temporär freigeschaltet werden. Nachrichten zwischen einer ersten Funkstation und einer zweiten Funkstation sind hierbei über den über eine oder mehrere weitere Funkstationen verlaufenden Pfad übertragbar. Die Versendung der Zulassungsinformationen erfolgt derart, dass während einer Nachrichtenübertragung über den Pfad unter Verwendung der Funkzugangstechnologie zu jedem Zeitpunkt eine Teilmenge an untereinander benachbarten Funkstationen des Pfades zur Kommunikation unter Verwendung der Funkzugangstechnologie freigeschaltet ist.

Die erfindungsgemäße Einrichtung kann auch Mittel zum Versenden der Zulassungsinformationen aufweisen, oder Mittel zum Anordnen der Versendung an eine andere Einrichtung. Die erfindungsgemäße Einrichtung eignet sich insbesondere zur Durchführung des beschriebenen erfindungsgemäßen Verfahrens, wobei dies auch auf die Ausgestaltung und Weiterbildungen zutrifft. Hierzu kann sie weitere geeignete Mittel aufweisen.

Im Folgenden wird die Erfindung anhand eines Ausführungsbeispiels näher erläutert. Dabei zeigen:
- Figur 1:: einen Ausschnitt aus einem ersten SDR Funkkommunikationssystem,
- Figur 2:: einen Ausschnitt aus einem zweiten SDR Funkkommunikationssystem.

Im Folgenden werden SDR Funkkommunikationssysteme betrachtet. Es wird davon ausgegangen, dass der Betreiber dieser Funkkommunikationssysteme eine bestimmte Anzahl von Lizenzen zur Verwendung einer Software, welche die Kommunikation von Teilnehmerfunkstationen unter Verwendung einer bestimmten Funkzugangstechnologie ermöglicht, gekauft hat. Aus Kostengründen ist der Betreiber jedoch im Besitz von nicht ausreichend Softwarelizenzen, um jede Teilnehmerfunkstation seines Funkkommunikationssystems die Software gleichzeitig einsetzen zu lassen. Er stellt den Teilnehmerfunkstationen die nicht vollständige Software zur Verfügung, so dass die Teilnehmerfunkstationen zur Verwendung der Software Zusatzinformationen benötigen. Diese Zusatzinformationen, umfassend z.B. einen geeigneten Schlüssel oder Code, werden den Teilnehmerfunkstationen in Form von Zulassungsinformationen zur Verfügung gestellt. Die Zulassungsinformationen ermöglichen es den Teilnehmerfunkstationen, permanent oder zeitlich begrenzt unter Verwendung der mit der lizenzierten Software in Verbindung stehenden Funkzugangstechnologie zu kommunizieren.

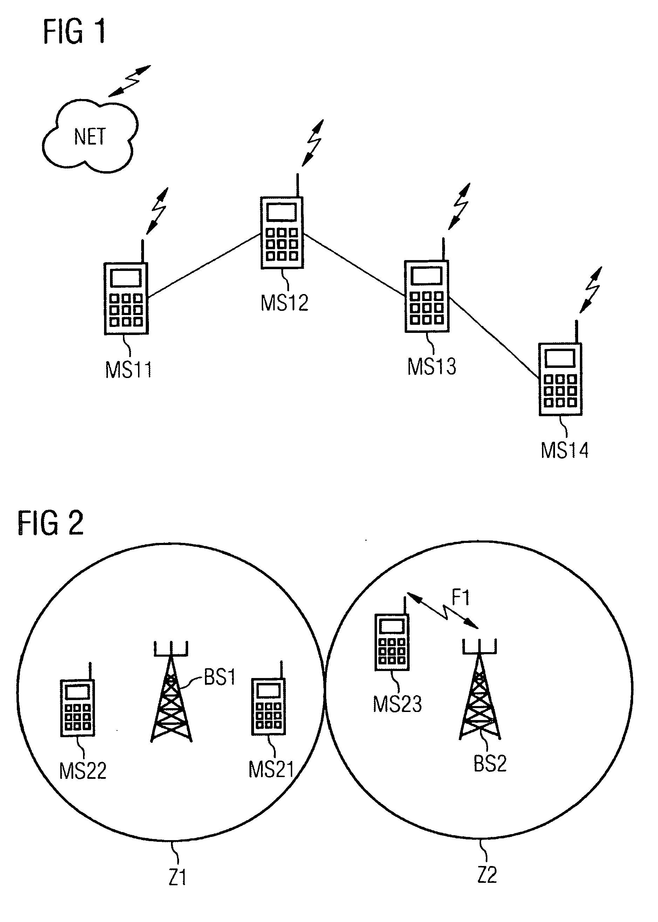

Zuerst wird ein SDR Funkkommunikationssystem betrachtet, in welchem Teilnehmerfunkstationen gemäß einem Adhoc-Modus direkt miteinander kommunizieren können. Der in Figur 1 dargestellte Ausschnitt aus dem Funkkommunikationssystem umfasst die vier teilnehmerseitigen Mobilstationen MS11, MS12, MS13 und MS14. Diese können untereinander und mit einer oder mehreren Funkeinrichtungen des Infrastrukturnetzes NET des Funkkommunikationssystems per Funk kommunizieren, durch Pfeile symbolisiert. Die Mobilstation MS11 beabsichtigt eine Nachrichtenübertragung an die Mobilstation MS14. Da es sich bei den beiden Mobilstationen MS11 und MS14 um nicht benachbarte Mobilstationen handelt, erfolgt die Nachrichtenübertragung über einen Pfad, welcher über die beiden Mobilstationen MS12 und MS13 verläuft. Die Nachrichtenübertragung erfolgt hierbei jeweils zwischen paarweise benachbarten Mobilstationen des Pfades, zuerst zwischen der Mobilstation MS11 und der Mobilstation MS12, dann zwischen der Mobilstation MS12 und der Mobilstation MS13, und schließlich zwischen der Mobilstation MS13 und der Mobilstation MS14. Die Ermittlung des Pfades zwischen den Mobilstationen MS11 und MS14 kann über an sich bekannte Verfahren erfolgen, es wird davon ausgegangen, dass der Pfad dem Infrastrukturnetz NET und/oder einer oder mehreren Mobilstationen MS11, MS12, MS13 und MS14 bekannt ist.

Die Nachrichtenübertragung zwischen der Mobilstation MS11 und der Mobilstation MS14 soll unter Verwendung der Funkzugangstechnologie erfolgen, für welche der Betreiber eine limitierte Anzahl an Softwarelizenzen besitzt. Um für die Nachrichtenübertragung zwischen der Mobilstation MS11 und der Mobilstation MS14 möglichst wenige Lizenzen einsetzen zu müssen, erfolgt eine Versendung von Zulassungsinformationen an die Mobilstationen MS11, MS12, MS13 und MS14 so, dass zu jedem Zeitpunkt der Nachrichtenübertragung jeweils genau zwei benachbarte Mobilstationen die lizenzierte Funkzugangstechnologie verwenden können. Zuerst werden die beiden Mobilstationen MS11 und MS12 durch die Zulassungsinformationen temporär berechtigt, die lizenzierte Funkzugangstechnologie zu verwenden. Im Anschluss an die Nachrichtenübertragung zwischen der Mobilstation MS11 und der Mobilstation MS12 wird der Mobilstation MS11 die Berechtigung entzogen und auf die Mobilstation MS13 übertragen. Es erfolgt die Nachrichtenübertragung zwischen den Mobilstationen MS12 und MS13, woraufhin die Berechtigung zur Benutzung der lizenzierten Funkzugangstechnologie von der Mobilstation MS12 auf die Mobilstation MS14 übertragen wird. Im Anschluss an die Nachrichtenübertragung zwischen den Mobilstationen MS13 und MS14 kann die Berechtigung auch den Mobilstationen MS13 und MS14 entzogen werden. Auf diese Weise werden für die Nachrichtenübertragung zwischen einer belieben Anzahl an Mobilstationen lediglich zwei Lizenzen für die verwendete Funkzugangstechnologie benötigt.

Das beschriebene Verfahren, bei welchem zwei Lizenzen zur Nachrichtenübertragung über einen Pfad eingesetzt werden, kann analog angewendet werden auf den Fall, dass mehr als zwei Lizenzen, jedoch weniger Lizenzen als die Anzahl der Mobilstationen des Pfades, eingesetzt werden sollen. Auch in diesem Fall liegt eine zusammenhängende Kette von Mobilstationen vor, welche kürzer als der gesamte Pfad ist, denen die Berechtigung erteilt wurde. Die Berechtigung wird einer Mobilstation, welche die Versendung der Nachricht abgeschlossen hat, entzogen und an die nächste Mobilstation, welcher noch keine Berechtigung zur Verfügung steht, weitergegeben.

Es ist möglich, dass die Versendungen der Zulassungsinformationen ausschließlich durch eine netzseitige Einrichtung des Infrastrukturnetzes NET erfolgen. Zur Kommunikation mit den Mobilstationen MS11, MS12, MS13 und MS14 kann hierbei eine andere als die lizenzierte Funkzugangstechnologie eingesetzt werden. Eine Möglichkeit besteht in der Verwendung von Zulassungsinformationen, welche die Mobilstationen nur für eine begrenzte Zeitspanne zur Verwendung der lizenzierten Funkzugangstechnologie berechtigen. Die netzseitige Einrichtung kann z.B. der Mobilstation MS13 dann die Zulassungsinformationen senden, wenn die Zeitspanne, während welcher die Mobilstation MS11 berechtigt ist, abgelaufen ist. Eine andere Möglichkeit besteht darin, dass die Mobilstation MS11 die netzseitige Einrichtung über die erfolgte Nachrichtenversendung an die Mobilstation MS12 informiert, woraufhin die netzseitige Einrichtung Zulassungsinformationen an die Mobilstation MS11 sendet, welche der Mobilstation MS11 die Befähigung zur Kommunikation unter Verwendung der lizenzierten Funkzugangstechnologie entziehen, während der Mobilstation MS13 Zulassungsinformationen gesendet werden, welche die Mobilstation MS13 zur Verwendung der lizenzierten Funkzugangstechnologie befähigen.

Eine andere Möglichkeit besteht darin, dass Zulassungsinformationen zwischen den Mobilstationen ausgetauscht werden, wobei hierfür eine andere als die lizenzierte Funkzugangstechnologie eingesetzt werden kann. So kann die Mobilstation MS11 nach erfolgreicher Nachrichtenübertragung an die Mobilstation MS12 der Mobilstation MS13 über die Mobilstation,MS12 Zulassungsinformationen übermitteln, welche die Mobilstation MS13 zur Verwendung der lizenzierten Funkzugangstechnologie befähigen. Nach dem Empfang der Zulassungsinformationen der Mobilstation MS11 bestätigt die Mobilstation MS13 den Empfang der Zulassungsinformationen. Diese Empfangsbestätigung entspricht in Bezug auf die Mobilstation MS11 Zulassungsinformationen, welche der Mobilstation MS11 die Befähigung zur Kommunikation unter Verwendung der lizenzierten Funkzugangstechnologie entziehen. Es ist jedoch auch möglich, dass der Mobilstation MS11 durch die Versendung der Zulassungsinformationen die Berechtigung zur Verwendung der lizenzierten Funkzugangstechnologie entzogen wird.

In Figur 2 ist ein Ausschnitt aus einem zellularen SDR Funkkommunikationssystem dargestellt, welcher die beiden Funkzellen Z1 und Z2 der Basisstationen BS1 und BS2 umfasst. In der Funkzelle Z1 der Basisstation BS1 befinden sich die Mobilstationen MS21 und MS22, in der Funkzelle Z2 der Basisstation BS2 hält sich die Mobilstation MS23 auf. Die vom Betreiber lizenzierte Funkzugangstechnologie verwendet zur Kommunikation zwischen Basisstationen und Mobilstationen eine Funkfrequenz F1. Die Mobilstation MS23 wurde von der Basisstation BS2 durch die Versendung von Zulassungsinformationen befähigt, unter Verwendung der lizenzierten Funkzugangstechnologie zu kommunizieren. Die Mobilstationen MS21, MS22 und MS23 messen in regelmäßigen Zeitabständen den Empfangspegel auf der Funkfrequenz F1. Da in der Umgebung der Mobilstation MS22 keine Kommunikation auf der Funkfrequenz F1 stattfindet, misst diese einen niedrigen Signalpegel und meldet dieses Messergebnis an die Basisstation BS1. Die Mobilstation MS21 hingegen, in deren Umgebung die Mobilstation MS23 auf der Funkfrequenz F1 mit der Basisstation BS2 kommuniziert, misst einen deutlich höheren Signalpegel und leitet ihr Messergebnis an die Basisstation BS1 weiter. Da in dem Funkkommunikationssystem eine begrenzte Anzahl an Softwarelizenzen zur Verfügung steht, werden vorwiegend solche Mobilstationen durch Zulassungsinformationen zur Kommunikation unter Verwendung der lizenzierten Funkzugangstechnologie befähigt, welche niedrige Signalpegel auf der von der lizenzierten Funkzugangstechnologie verwendeten Funkfrequenz F1 messen.

Dies bedeutet, dass die Entscheidung darüber, welche Mobilstationen zur Kommunikation unter Verwendung der lizenzierten Funkzugangstechnologie befähigt werden, von der zu erwartenden Übertragungsqualität, dem Quality of Service (QoS) abhängig gemacht wird. Im betrachteten Beispiel sendet die Basisstation BS1 daher Zulassungsinformationen an die Mobilstation MS22, und nicht an die Mobilstation MS21.

Die anhand der Figuren 1 und 2 beschriebene Vorgehensweise kann auch auf Repeater bzw. Extension Points angewandt werden, d.h. auf Funkstationen, die Signale zu bzw. von einer Basisstation weiterleiten und somit den Funkabdeckungsbereich der Basisstation vergrößern. Auch kann es sich bei manchen der Funkstationen, welche die Zulassungsinformationen empfangen, um Teilnehmerfunkstationen handeln, und bei manchen um netzseitige Repeater. Ein SDR Extension Point sollte gemäß den obigen Ausführungen zu Figur 2 nur dann durch Zulassungsinformationen befähigt werden, die lizenzierte Funkzugangstechnologie zu verwenden, wenn er keine oder niedrige Interferenzen auf der Funkfrequenz der lizenzierten Funkzugangstechnologie erfährt.

Die Erfindung ist nicht auf die Verwendung einer bestimmten Art an Zulassungsinformationen beschränkt. In Bezug auf die Versendung und Wirkung von Zulassungsinformationen können verschiedenartige an sich bekannte Verfahren eingesetzt werden.

## Patentansprüche

1. Verfahren zum Betreiben eines Funkkommunikationssystems, bei dem
Zulassungsinformationen an Funkstationen (MS11, MS12, MS13, MS14) gesendet werden, so dass diese Funkstationen (MS11, MS12, MS13, MS14) durch die
Zulassungsinformationen freigeschaltet werden zur Kommunikation unter Verwendung einer Funkzugangstechnologie,
**dadurch gekennzeichnet, dass**
Nachrichten zwischen einer ersten Funkstation (MS11) und einer zweiten Funkstation (MS14) über einen über eine oder mehrere weitere temporär freigeschaltete Funkstationen (MS12, MS13) verlaufenden Pfad übertragbar sind, und
eine Versendung der Zulassungsinformationen derart erfolgt, dass während einer Nachrichtenübertragung über den Pfad unter Verwendung der Funkzugangstechnologie zu jedem Zeitpunkt eine Teilmenge an untereinander benachbarten Funkstationen (MS11, MS12, MS13, MS14) des Pfades freigeschaltet ist zur Kommunikation unter Verwendung der Funkzugangstechnologie.

2. Verfahren nach Anspruch 1, **dadurch gekennzeichnet, dass** eine Versendung der Zulassungsinformationen derart erfolgt, dass während einer Nachrichtenübertragung über den Pfad unter Verwendung der Funkzugangstechnologie zu jedem Zeitpunkt zwei benachbarte Funkstationen (MS11, MS12, MS13, MS14) des Pfades freigeschaltet sind zur Kommunikation unter Verwendung der Funkzugangstechnologie.

3. Verfahren nach Anspruch 1 oder 2, **dadurch gekennzeichnet, dass**
die Versendung der Zulassungsinformationen zur Nachrichtenübertragung über den Pfad durch eine netzseitige Einrichtung erfolgt.

4. Verfahren nach Anspruch 1 oder 2, **dadurch gekennzeichnet, dass**
die Versendung der Zulassungsinformationen zur Nachrichtenübertragung über den Pfad zumindest teilweise durch Funkstationen (MS11, MS12, MS13, MS14) des Pfades erfolgt.

5. Einrichtung für ein Funkkommunikationssystem mit
Mitteln zum Versenden von Zulassungsinformationen an Funkstationen (MS11, MS12, MS13, MS14), so dass diese Funkstationen (MS11, MS12, MS13, MS14) zur Kommunikation unter Verwendung einer Funkzugangstechnologie durch die Zulassungsinformationen freigeschaltet werden, **dadurch gekennzeichnet, dass**
Nachrichten zwischen einer ersten Funkstation (MS11) und einer zweiten Funkstation (MS14) über den über eine oder mehrere weitere temporär freigeschaltete Funkstationen (MS12, MS13) verlaufenden Pfad übertragbar sind,
wobei die Versendung der Zulassungsinformationen derart erfolgt, dass während einer Nachrichtenübertragung über den Pfad unter Verwendung der Funkzugangstechnologie zu jedem Zeitpunkt eine Teilmenge an untereinander benachbarten Funkstationen (MS11, MS12, MS13, MS14) des Pfades zur Kommunikation unter Verwendung der Funkzugangstechnologie freigeschaltet ist.

## Claims

1. Method for operating a radio communication system, in which
authorisation data is sent to radio stations (MS11, MS12, MS13, MS14) so that these radio stations (MS11, MS12, MS13, MS14) are activated by the authorisation data for communication using a radio access technology,
**characterised in that**
messages between a first radio station (MS11) and a second radio station (MS14) can be transmitted over a path running via one or more additional, temporarily activated radio stations (MS12, MS13), and the authorisation data is sent in such a way that during a message transmission over the path using the radio access technology, a subset of radio stations (MS11, MS12, MS13, MS14) situated adjacent to each other in the path is activated at any one time for communication using the radio access technology.

2. Method according to claim 1, **characterised in that**
the authorisation data is sent in such a way that during a message transmission over the path using the radio access technology, two adjacent radio stations (MS11, MS12, MS13, MS14) in the path are activated for communication using the radio access technology at any one time.

3. Method according to claim 1 or 2, **characterised in that** the authorisation data for message transmission over the path is sent by a network-side device.

4. Method according to claim 1 or 2, **characterised in that** the authorisation data for message transmission over the path is sent at least partially by radio stations (MS11, MS12, MS13, MS14) in the path.

5. Device for a radio communication system having means for sending authorisation data to radio stations (MS11, MS12, MS13, MS14) so that these radio stations (MS11, MS12, MS13, MS14) are activated by the authorisation data for communication using a radio access technology,
**characterised in that**
messages between a first radio station (MS11) and a second radio station (MS14) can be transmitted over the path running via one or more additional, temporarily activated radio stations (MS12, MS13), where the authorisation data is sent in such a way that during a message transmission over the path using the radio access technology, a subset of radio stations (MS11, MS12, MS13, MS14) situated adjacent to each other in the path is activated at any one time for communication using the radio access technology.

## Revendications

1. Procédé pour exploiter un système de radiocommunication, avec lequel des informations d'agrément sont envoyées à des stations radio (MS11, MS12, MS13, MS14), de sorte que ces stations radio (MS11, MS12, MS13, MS14) sont autorisées à communiquer par les informations d'agrément avec l'utilisation d'une technologie d'accès radio, **caractérisé en ce que** des messages peuvent être transmis entre une première station radio (MS11) et une seconde station radio (MS14) au moyen d'un chemin passant par une ou plusieurs autres stations radio (MS12, MS13) autorisées provisoirement, et un envoi des informations d'agrément peut s'effectuer de telle sorte que, pendant une transmission de messages par le chemin avec l'utilisation de la technologie d'accès radio, une quantité partielle de stations radio (MS11, MS12, MS13, MS14) voisines entre elles du chemin est autorisée à tout moment à communiquer en utilisant la technologie d'accès radio.

2. Procédé selon la revendication 1, **caractérisé en ce qu'**un envoi des informations d'agrément s'effectue de telle sorte que, pendant une transmission de message par le chemin avec l'utilisation de la technologie d'accès radio, deux stations radio (MS11, MS12, MS13, MS14) voisines du chemin sont autorisées à tout moment à communiquer en utilisant la technologie d'accès radio.

3. Procédé selon la revendication 1 ou 2, **caractérisé en ce que** l'envoi des informations d'agrément pour la transmission de messages par le chemin s'effectue par un dispositif côté réseau.

4. Procédé selon la revendication 1 ou 2, **caractérisé en ce que** l'envoi des informations d'agrément pour la transmission de messages par le chemin s'effectue au moins en partie par des stations radio (MS11, MS12, MS13, MS14) du chemin.

5. Dispositif pour un système de radiocommunication comprenant des moyens pour l'envoi d'informations d'agrément à des stations radio (MS11, MS12, MS13, MS14), de sorte que ces stations radio (MS11, MS12, MS13, MS14) sont autorisées à communiquer avec l'utilisation d'une technologie d'accès radio par les informations d'agrément, **caractérisé en ce que** des messages peuvent être transmis entre une première station radio (MS11) et une seconde station radio (MS14) par le chemin passant par une ou plusieurs autres stations radio (MS12, MS13) autorisées provisoirement, l'envoi des informations d'agrément s'effectuant de telle sorte que, pendant une transmission de messages par le chemin avec l'utilisation de la technologie d'accès radio, une quantité partielle de stations radio (MS11, MS12, MS13, MS14) voisines entre elles du chemin est autorisée à tout moment à communiquer en utilisant la technologie d'accès radio.
